# EUROPÄISCHE PATENTANMELDUNG

(11) **EP 2 505 896 A2**
(43) Veröffentlichungstag der Anmeldung: **03.10.2012**
(21) Anmeldenummer: 12161820.1
(22) Anmeldetag: 28.03.2012
(51) Int. Cl.: F16L 33/03, F16L 37/088

(54) **Schnellverbinder zur Herstellung lösbarer Schlauch- und/oder Rohrverbindungen**

(30) Priorität: 28.03.2011 DE 102011001607
(71) Anmelder: Muhr und Bender KG, 57439 Attendorn (DE)
(72) Erfinder: Funke, Jörg, 57413 Finnentrop (DE); Wacker, Peter, 57368 Lennenstadt-Maumke (DE)
(74) Vertreter: Oberwalleney, Stephan

(57) **Zusammenfassung**

Schnellverbinder zur Herstellung lösbarer Schlauch- und/oder Rohrverbindungen, mit einer Kupplungsaufnahme (3) und mit einem Kupplungsstecker (4), wobei die Kupplungsaufnahme (3) mit einer Einstecköffnung (7) für den Kupplungsstecker (4) versehen ist und wobei eine Nut (2) zur Aufnahme mindestens einer der Verriegelung von Kupplungsaufnahme (3) und Kupplungsstecker (4) dienenden Verriegelungsfeder (8) vorgesehen ist.

## Beschreibung

Die Erfindung betrifft einen Schnellverbinder zur Herstellung lösbarer Schlauch-und/oder Rohrverbindungen, mit einer Kupplungsaufnahme und mit einem Kupplungsstecker, wobei die Kupplungsaufnahme mit einer Einstecköffnung für den Kupplungsstecker versehen ist und wobei eine Nut zur Aufnahme mindestens einer der Verriegelung von Kupplungsaufnahme und Kupplungsstecker dienenden Verriegelungsfeder vorgesehen ist.

Ein solcher Schnellverbinder in Form einer Steckkupplung findet insbesondere in der Fahrzeugtechnik und im Industrieanlagenbau für das Verbinden der Schlauchenden von zwei Schläuchen oder für das Verbinden der Rohrenden von zwei Rohren oder auch für das Verbinden des Rohrendes eines Rohrs mit dem Schlauchende eines Schlauchs. Darauf ist jedoch die Verwendbarkeit der Steckkupplung nicht beschränkt. Beispielsweise kann diese Steckkupplung auch für Schlauch- und/oder Rohrverbindungen in der Haustechnik oder Be- und Entwässerungstechnik eingesetzt werden. Weiterhin kann die Kupplungsaufnahme oder der Kupplungsstecker auch ortsfest vorgesehen sein, so dass ein Schlauchende oder ein Rohrende, mit einer Kupplungsaufnahme oder mit einem Kupplungsstecker versehen, auf einen ortsfesten Kupplungsstecker aufgesteckt bzw. in eine ortsfeste Kupplungsaufnahme eingesteckt werden kann. Unabhängig von der vielseitigen Verwendbarkeit, wird nachfolgend, ohne jede Beschränkung, ein Schnellverbinder zur Herstellung lösbarer Schlauch- und/oder Rohrverbindungen beschrieben.

Eine Steckkupplung der eingangs beschriebenen Art ist bereits aus der Praxis bekannt. Zur Ver- und Entriegelung weist die bekannte Steckkupplung gemäß FR 2 918 722 A1 eine Federbandschelle auf, die auf einem zylindrisch geformten Bereich eines flexiblen Trägers angeordnet ist, wobei der zylindrisch geformte Bereich seitliche Anschläge aufweist. Ein als Expander bezeichneter Stecker ist dazu vorgesehen, in einer ersten Relativposition von Träger und Expander den ringförmigen Träger mitsamt der Federbandschelle aufzuweiten und, in einer zweiten Relativposition von Träger und Expander ein Zusammenziehen von Träger und Federbandschelle durch die Rückstellkraft der Federbandschelle zu ermöglichen.

Nachteilig ist bei der bekannten, zuvor beschriebenen Steckkupplung, dass eine sichere Verriegelung der Kupplung in der zweiten Relativposition von Träger und Expander nicht ohne Weiteres verifizierbar ist. Da die Federbandschelle ausschließlich auf dem Träger angeordnet ist, ist eine fehlerhafte Verriegelung weder anhand der relativen Position der Federbandschelle zu dem Träger, noch anhand der relativen Position der Federbandschelle zu dem Expander erkennbar. Ob ein für eine sichere Verriegelung ausreichendes Zusammenziehen in radialer Richtung erfolgt ist, oder nicht, ist anhand der Federbandschelle oder dem Träger nicht sicher erkennbar.

In der Druckschrift WO 2011/006729A1 ist eine Vorrichtung zum Verbinden zweier Rohrenden mit einem Steckteil und einem korrespondierenden Muffenteil, sowie eine form- oder kraftschlüssig wirkenden Schelle zur Sicherung der Verbindung offenbart. Das Steckteil und das Muffenteil weisen endseitig mehrere über den Umfang verteilt angeordnete, korrespondierende Ausklinkungen auf, wobei die Endabschnitte der nicht ausgeklinkten Bereiche im wesentlichen radial nach außen weisende Stege als Anschlag für die Schelle aufweisen.

Die DE 197 13 446 A1 offenbart eine Kupplung für Kraftstoffleitungen oder dergleichen, wobei die beiden fluiddicht ineinander gesteckten, einen Durchgangskanal für den Kraftstoff bildenden Kupplungsteile durch eine Haltevorrichtung miteinander verbunden sind, die zumindest ein Paar beim Ineinanderstecken der beiden Kupplungsteile axial ineinander schiebbare und jeweils an einem Kupplungsteil exzentrisch zum Durchgangskanal angeordnete Sperrelemente umfasst, zwischen denen, bei fluiddicht ineinander gesteckten Kupplungsteilen, ein Bewegungsspiel vorgesehen ist, das die gegenseitige Verdrehbarkeit der beiden Kupplungsteile auf den durch das Bewegungsspiel vorgegebenen Drehweg begrenzt. Die Haltevorrichtung umfasst ferner zumindest zwei Verriegelungselemente, die, bei fluiddicht ineinander gesteckten Kupplungsteilen und axial ineinander geschobenen Sperrelementen, zum gegenseitigen Festhalten der beiden Kupplungsteile miteinander in Eingriff bringbar sind.

Eine Aufgabe der Erfindung besteht darin, die bekannte Steckkupplung in Bezug auf die Handhabung beim Verriegeln zu verbessern.

Die Aufgabe wird durch einen Schnellverbinder gelöst, der insbesondere für Schlauchverbindungen und weiterhin insbesondere zur Verwendung in Kraftfahrzeugen vorgesehen ist. Der Schnellverbinder weist eine Kupplungsaufnahme und einen Kupplungsstecker auf, wobei die Kupplungsaufnahme eine Einstecköffnung für den Kupplungsstecker aufweist. Erfindungsgemäß sind an der Kupplungsaufnahme Führungsstege und an dem Kupplungsstecker Führungssegmente derart angeordnet, dass die Führungsstege und die Führungssegmente sich komplementär, also gegenseitig, zu einer Nut ergänzen, wobei seitliche Begrenzungsflächen der Nut durch die Führungsstege und durch die Führungssegmente gebildet sind, sobald der Kupplungsstecker mit der Kupplungsaufnahme verbunden ist. Die Nut ist erfindungsgemäß zur Aufnahme mindestens einer der Verriegelung von Kupplungsaufnahme und Kupplungsstecker dienenden Verriegelungsfeder vorgesehen.

Ein Vorteil des erfindungsgemäßen Schnellverbinders besteht darin, dass die Nut zur Aufnahme der Verriegelungsfeder erst dann durch die Führungsstege und die Führungssegmente gebildet wird, wenn der Kupplungsstecker und die Kupplungsaufnahme verbunden sind. Bevor diese Bedingung erfüllt ist, ist die Nut zur Aufnahme der Verriegelungsfeder erkennbar nicht bzw. nicht vollständig gebildet, so dass eine nicht vollständige Verbindung durch einen Benutzer vorteilhaft leicht erkennbar ist, und zwar beispielsweise durch optische, akustische und/oder haptische Wahrnehmung. Das Erreichen der vollständig verbundenen Position von Kupplungsstecker und Kupplungsaufnahme kann auf diese Weise auch ohne Einsatz einer Verriegelungsfeder verifiziert werden. Vorzugsweise ist die Verriegelungsfeder jedoch Bestandteil des Schnellverbinders. In diesem Fall besteht ein weiterer Vorteil darin, dass die Verriegelungsfeder erst dann in die Nut einrasten kann, wenn diese vollständig durch die Führungssegmente und die Führungsstege gebildet ist. Da sowohl die Führungssegmente, als auch die Führungsstege zur Bildung der Nut zur Aufnahme der Verriegelungsfeder beitragen, kann die Verriegelungsfeder während des Verbindungsvorgangs nicht bereits auf entweder den Führungssegmenten oder den Führungsstegen einrasten.

Gemäß einer bevorzugten Ausführungsform ist vorgesehen, dass die Führungsstege in axialer Richtung über die Einstecköffnung hinausragen. Weiterhin bevorzugt ist vorgesehen, dass die Führungssegmente auf dem Umfang des Kupplungssteckers angeordnet sind. Insbesondere sind die Führungssegmente mit einem Abstand von einem freien Ende des Kupplungssteckers angeordnet. Dadurch wird erreicht, dass das freie Ende des Kupplungssteckers um eine dem Abstand entsprechende Länge in die Einstecköffnung eingesteckt werden muss, bevor der Kupplungsstecker und die Kupplungsaufnahme verbunden sind und die Führungssegmente mit den Führungsstegen in Eingriff gelangen und gemeinsam die Nut bilden. Es ist bevorzugt vorgesehen, dass das freie Ende in der Einstecköffnung über den Abstand axial geführt ist, wodurch der Kupplungsstecker vorteilhaft auf die Kupplungsaufnahme ausgerichtet wird. Die Führungsstege und die Führungselemente gelangen weiterhin bevorzugt bei einem Einstecken des Kupplungssteckers in die Kupplungsaufnahme über den Abstand hinaus in gegenseitigen Eingriff, beispielsweise im Sinne einer Verzahnung wodurch eine relative Bewegung der Kupplungsaufnahme zu dem Kupplungsstecker auch in Umfangsrichtung verhindert wird.

Die Dichtheit der Schlauch- und/oder Rohrverbindung wird vorzugsweise durch ein Dichtelement, insbesondere in einer entsprechenden Dichtungsnut an der Innenseite der Einstecköffnung oder an der Außenseite des Kupplungssteckers erreicht.

Grundsätzlich ist eine Anzahl von zwei Führungsstegen und zwei Führungssegmenten denkbar, ebenso wie ein einzelnes Führungssegment mit einem einzelnen Führungssteg. Die bevorzugte Anzahl an Führungsstegen und Führungssegmenten beträgt jedoch drei oder mehr, wodurch eine vorteilhaft gegen ein Abknicken stabilisierte Verbindung zwischen der Kupplungsaufnahme und dem Kupplungsstecker geschaffen wird. Vorzugsweise sind also an der Kupplungsaufnahme mindestens drei Führungsstege über den Umfang verteilt angeordnet, wobei die Führungsstege und die Führungssegmente sich jeweils über einen Umfangsabschnitt erstrecken, wobei alle Umfangsabschnitte sich zu einem vollen Umfang ergänzen. Bei beispielsweise kreisrunden Querschnitt der Kupplungsaufnahme und des Kupplungssteckers weisen die Führungssegmente und die Führungsstege daher die geometrische Form von Hohlzylindersegmenten. Dabei kann die Länge der Umfangsabschnitte in Umfangsrichtung, bzw. die Winkelbereiche über die sich die Umfangsabschnitte erstrecken, bei allen Führungsstegen und/oder allen Führungssegmenten gleich groß sein, also beispielsweise 60° bei je drei Führungsstegen und Führungssegmenten.

Gemäß einer weiteren bevorzugten Ausführungsform ist vorgesehen, dass der Umfangsabschnitt mindestens eines Führungsstegs sich in seiner Länge entlang des Umfangs von den Umfangsabschnitten der übrigen Führungsstege unterscheidet und/oder dass der Umfangsabschnitt mindestens eines Führungssegments sich in seiner Länge entlang des Umfangs von den Umfangsabschnitten der übrigen Führungssegmente unterscheidet, wodurch vorteilhaft eine Kodierung erreicht wird, die ein Einstecken des Kupplungssteckers in die Kupplungsaufnahme in nur einer Orientierung zulässt.

Gemäß einer weiteren bevorzugten Ausführungsform ist vorgesehen, dass die Führungsstege und die Führungssegmente jeweils erste Absätze zur Bildung der seitlichen Begrenzungsflächen der Nut aufweisen, wobei die ersten Absätze jeweils eine ansteigende Rampe zum Aufweiten der Verriegelungsfeder aufweisen. Dadurch wird vorteilhaft erreicht, dass die Verriegelungsfeder auf den Führungsstegen oder auf den Führungselementen vormontiert werden kann, da die ansteigende Rampe bei einem Einstecken in die Verriegelungsfeder eingreift und nachfolgend während des Einsteckvorgangs aufweitet, bevor die Verriegelungsfeder schließlich bei Erreichen der vollständig verbundenen Position in die dann erst gebildete Nut einrastet. Besonders bevorzugt weisen die Führungsstege und die Führungssegmente jeweils zweite Absätze auf, wobei die ersten Absätze der Führungsstege mit den zweiten Absätzen der Führungssegmente, sowie die ersten Absätze der Führungssegmente mit den zweiten Absätzen der Führungsstege sich jeweils zu einer geschlossenen seitlichen Begrenzungsfläche der Nut ergänzen, sobald der Kupplungsstecker mit der Kupplungsaufnahme verbunden ist.

Gemäß einer weiteren bevorzugten Ausführungsform ist vorgesehen, dass eine der Verriegelung von Kupplungsaufnahme und Kupplungsstecker dienenden Verriegelungsfeder vorgesehen ist, wobei insbesondere eine axiale Breite der Verriegelungsfeder einer axialen Breite der Nut entspricht. Insbesondere überdeckt die Verriegelungsfeder im Wesentlichen einen Grund der Nut in dem eingerasteten Zustand. Dadurch, dass die Verriegelungsfeder die Nut praktisch ausfüllt, ist der Verriegelungszustand deutlich optisch zu erkennen. Der Nutgrund weist besonders bevorzugt eine optisch auffällige Gestaltung auf, so dass das Verschwinden des Nutgrundes bei einrasten der Verriegelungsfeder besonders leicht festgestellt wird.

Gemäß einer weiteren bevorzugten Ausführungsform ist vorgesehen, dass die Verriegelungsfeder in dem eingerasteten Zustand mit den ersten Absätzen und/oder mit den zweiten Absätzen eine im Wesentlichen geschlossene Oberfläche bildet, wodurch auch bei schlechten Sichtverhältnissen eine haptische Kontrolle der Verriegelung vorteilhaft ermöglicht wird.

Weiterhin bevorzugt ist die Verriegelungsfeder in einem getrennten Zustand von Kupplungsaufnahme und Kupplungsstecker auf den Führungsstegen oder auf den Führungssegmenten vormontiert, wobei die Verriegelungsfeder bei dem Verbinden von Kupplungsaufnahme und Kupplungsstecker durch die besonders bevorzugt starr ausgebildeten Führungsstege oder durch die Führungssegmente aufweitbar ist. Durch die starr ausgeführten Führungsstege wird der Nachteil vermieden, dass es bei elastischen Elementen beim Entriegeln trotz Anschlägen dazu kommen kann, dass auf Grund der Flexibilität die Verriegelungsfeder unbeabsichtigt abgezogen wird und verloren geht, so dass für eine erneute Verriegelung von Kupplungsaufnahme und Kupplungsstecker erst eine neue Verriegelungsfeder beschafft werden muss.

Weiterhin ist bevorzugt vorgesehen, dass die Verriegelungsfeder Angriffspunkte, insbesondere zwei Angriffspunkte, aufweist, wobei die Angriffspunkte ein Aufweiten der Verriegelungsfeder zum Lösen der Schlauch- und/oder Rohrverbindung ermöglichen. Das Aufweiten erfolgt beispielsweise manuell, bevorzugt jedoch mit Hilfe eines Werkzeugs, wie beispielsweise einer Sicherungsringzange, Spreizzange oder vergleichbaren Werkzeugen.

Nachfolgend wird die Erfindung anhand von in Zeichnungen dargestellten Ausführungsbeispielen näher erläutert. Die Ausführungen sind beispielhaft und schränken den allgemeinen Erfindungsgedanken nicht ein.

Es zeigen
Figuren 1A, 1B und 1C eine Ausführungsform eines erfindungsgemäßen Schnellverbinders in offenem Zustand in verschiedenen Ansichten;
Figur 1 D eine Detailansicht gemäß Figur 1 B;
Figuren 2A, 2B und 2C den Schnellverbinder gemäße Figuren 1A, 1B und 1C in geschlossenem Zustand;
Figur 3 die Ausführungsform gemäß Figuren 1A, 1B und 1C perspektivisch in Einzelteile zerlegt;
Figur 4 eine Ausführungsform des Schnellverbinders mit einer Federbandschelle als Verriegelungsfeder perspektivisch in Einzelteile zerlegt;
Figur 5 eine Ausführungsform des Schnellverbinders mit einem Drahtfederring als Verriegelungsfeder perspektivisch in Einzelteile zerlegt;
Figur 6 die Ausführungsform gemäß Figur 3 in zwei Varianten;
Figur 7A eine Ausführungsform des Kupplungssteckers in einer Ansicht in axialer Richtung;
Figur 7B eine Ausführungsform der Kupplungsaufnahme für die Ausführungsform des Kupplungssteckers in Figur 7A in einer Ansicht in axialer Richtung;
Figuren 8A und 8B verschiedene Möglichkeiten, die Verriegelungsfeder vorzumontieren;
Figur 9 eine Ausführungsform des erfindungsgemäßen Schnellverbinders mit farblich abgesetztem Nutgrund;
Figuren 10A, 10B Beispiele für fehlerhaft verbundene Kupplungsstecker und Kupplungsaufnahmen; und
Figur 10C die korrekte Verriegelung des Schnellverbinders gemäß Figur 9.

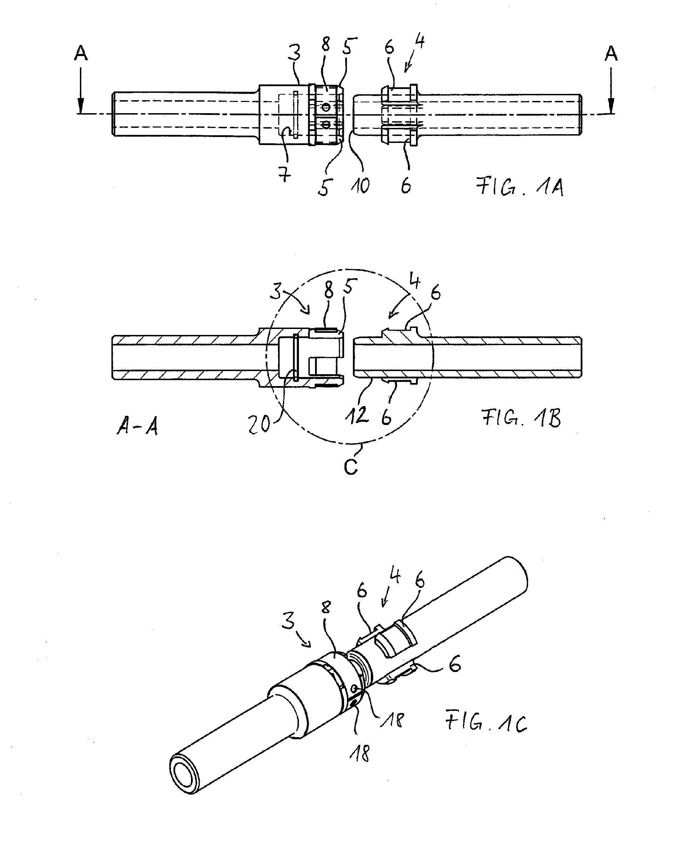

In der Figur 1 A ist eine mögliche Ausführungsform des erfindungsgemäßen Schnellverbinders in einer Seitenansicht dargestellt. Eine Kupplungsaufnahme 3 ist nicht mit einem Kupplungsstecker 4 verbunden. Eine Einstecköffnung 7 der Kupplungsaufnahme 3 ist mit unterbrochener Linie dargestellt. Eine Verriegelungsfeder 8 ist hier beispielhaft auf der Kupplungsaufnahme 3 vormontiert, und zwar auf überstehenden Führungsstegen 5, die sich auskragend in axialer Richtung von der Kupplungsaufnahme 3 erstrecken. Gegengleich oder kongruent ausgebildete Führungssegmente 6 sind entfernt von einem freien Ende 10 des Kupplungssteckers 4 angeordnet.

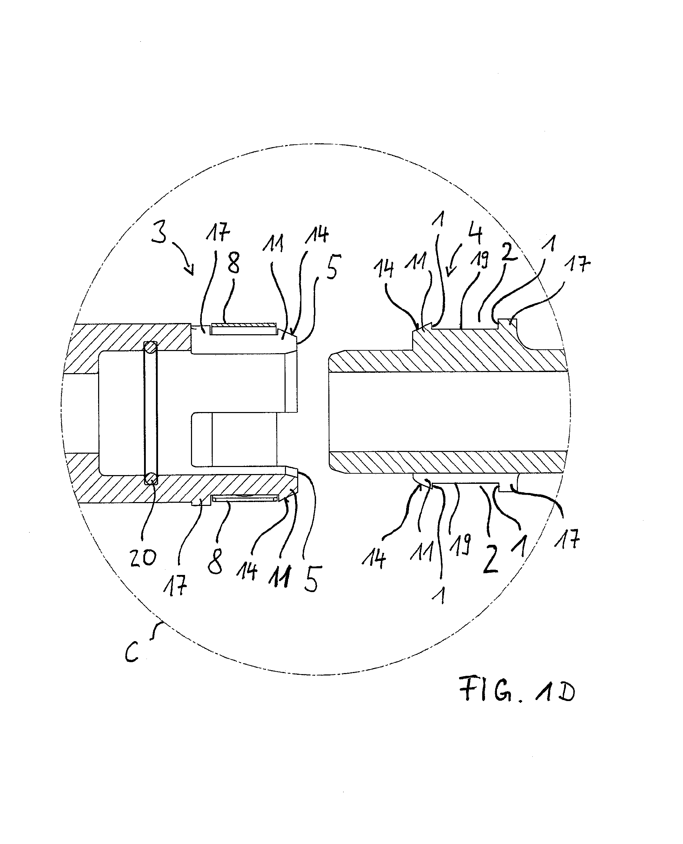

Die Figur 1 B zeigt einen Schnitt entlang der Linie A-A in Figur 1A und die Figur 1D zeigt den mit C bezeichneten Bereich aus Figur 1 B als vergrößertes Detail. Sowohl die Führungssegmente 6, als auch die Führungsstege 5 weisen jeweils erste Absätze 11 auf, welche jeweils auf der Stoßseite der Führungssegmente 6 bzw. der Führungsstege 5 angeordnet und in Form einer Rampe 14 ausgebildet sind. Die einem Nutgrund 19 zugewandte Seite der Absätze 11 bildet eine seitliche Begrenzungsfläche 1 der Nut 2. Durch die Rampe 14 wird erreicht, dass die vormontierte Verriegelungsfeder 8 beim Einstecken des Kupplungssteckers 4 in die Kupplungsaufnahme 3 aufgeweitet wird. Zweite Absätze 17 an den Führungssegmenten 6 und an den Führungsstegen 5 ergänzen die ersten Absätze 11 zu umlaufenden Anschlägen und bilden im Wechsel mit den Absätzen 11 die seitliche Begrenzungsflächen 1 der Nut 2. Eine Dichtung 20 kann in einer entsprechenden Dichtungsnut an der Innenseite der Einstecköffnung 7 angeordnet sein.

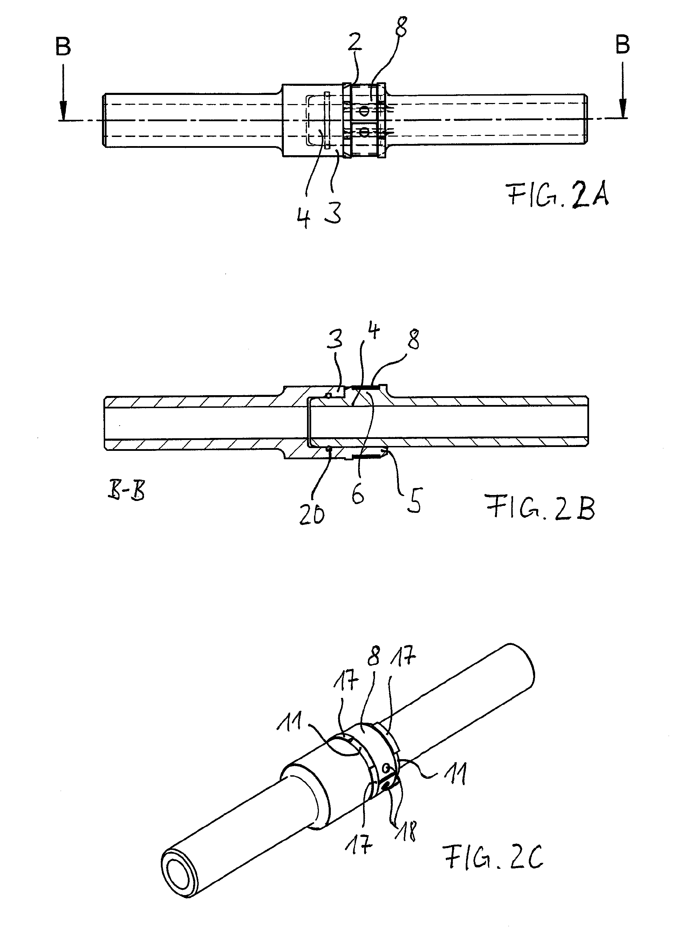

In der perspektivischen Darstellung gemäß Figur 1C ist zu erkennen, dass die Führungssegmente 6 sich über Umfangsabschnitte erstrecken, so dass diese sich beim Einstecken mit den Führungsstegen 5 zur Bildung der Nut 2 ergänzen, sobald der Kupplungsstecker 4 mit der Kupplungsaufnahme 3 verbunden ist, wie in den Figuren 2A, 2B und 2C dargestellt.

Die Figur 2A zeigt wiederum eine Seitenansicht des nunmehr verbundenen Kupplungssteckers 4 mit der Kupplungsaufnahme 3. Die Nut 2 dient zur Aufnahme der Verriegelungsfeder 8, welche die Nut 2 im Wesentlichen in voller Breite und Tiefe ausfüllt.

Die Figur 2B zeigt einen Schnitt entlang der Linie B-B in Figur 2A. Der Kupplungsstecker 4 ist in die Kupplungsaufnahme 3 eingesteckt, so dass die Führungsstege 5 und die Führungssegmente 6 eine in axialer Richtung übereinstimmende Position einnehmen, in der diese sich gegenseitig zur Bildung der Nut 2 ergänzen. Der Dichtring 20 dichtet in dieser Position die Verbindung ab. Hier, ebenso wie in Figur 2C ist erkennbar, dass die Verriegelungsfeder 8 die Nut 2 derart ausfüllt, dass die ersten Absätze 11, bzw. die zweiten Absätze 17 mit der Oberfläche der Verriegelungsfeder 8 eine im Wesentlichen durchgehende Oberfläche bilden, wodurch vorteilhaft auch haptische überprüfbar ist, ob die Verriegelungsfeder 8 eingerastet ist, oder nicht. Die Verriegelungsfeder 8 wird hier durch einen Federbandring gebildet, der Angriffspunkte 8 in Form von Bohrungen aufweist, die zum Ansetzten eines Werkzeugs, insbesondere einer Sicherungsringzange dienen, um den Schnellverbinder wieder öffnen zu können.

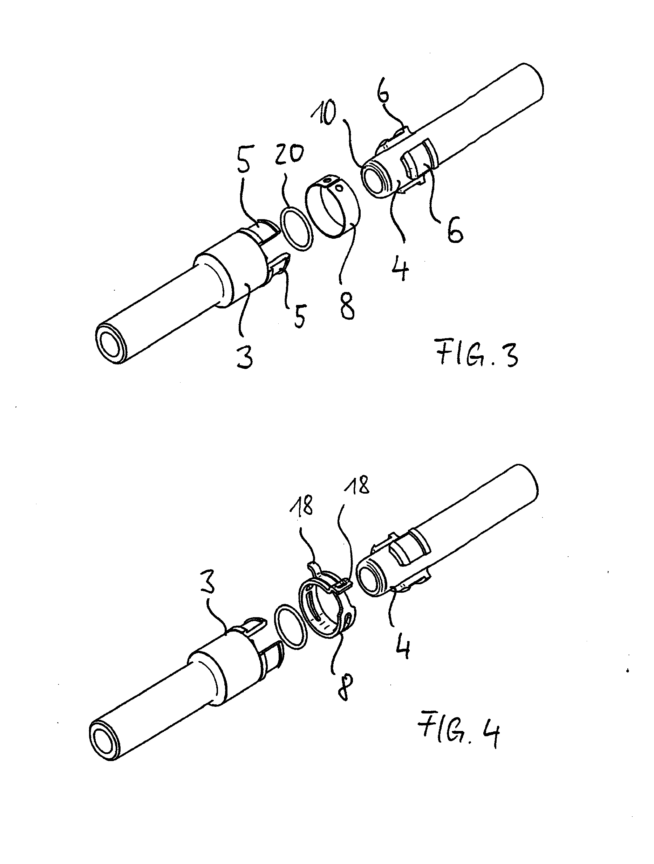

In der Figur 3 ist die Ausführungsform gemäß Figuren 1A, 1B und 1C perspektivisch in Einzelteile zerlegt, als Explosivdarstellung gezeigt. Deutlich erkennbar sind die Führungsstege 5 entsprechend der Führungssegmente 6 geformt, so dass diese sich zu einer Nut 2 (siehe Figur 2C) ergänzen, sobald der Kupplungsstecker 4 mit der Kupplungsaufnahme 3 verbunden ist.

Die Figur 4 zeigt eine Ausführungsform des Schnellverbinders mit einer Federbandschelle als Verriegelungsfeder 8, deren Angriffspunkte 18 radial abstehen, so dass hier beispielsweise eine Flachzange zum Öffnen der Schlauch- und/oder Rohrverbindung verwendet werden kann. Die Kupplungsaufnahme 3 und der Kupplungsstecker 4 unterscheiden sich nicht von der Ausführungsform mit Federbandring gemäß Figur 3.

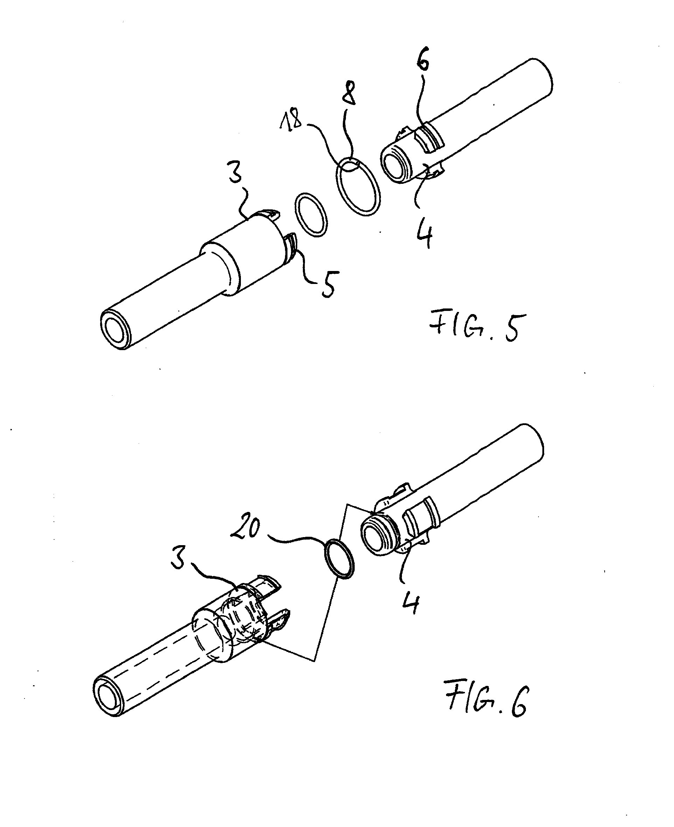

Die Figur 5 zeigt eine Ausführungsform mit einem Drahtring als Verriegelungsfeder 8, wobei die Führungsstege 5 und die Führungssegmente 6 dementsprechend eine schmalere Nut bilden, sobald der Kupplungsstecker 4 mit der Kupplungsaufnahme 3 verbunden ist.

Die Figur 6 zeigt zwei Varianten der Ausführungsform gemäß Figur 3 auf, nämlich eine erste, in der der Dichtring 20 in einer Dichtungsnut an der Innenseite der Einstecköffnung 7 (siehe Figur 1A, 1 B) angeordnet ist und eine zweite, gemäß der der Dichtring 20 in einer Dichtungsnut auf der Außenseite des Kupplungssteckers 4 angeordnet ist. Beide Varianten sind auf alle zuvor beschriebenen Ausführungsformen anwendbar.

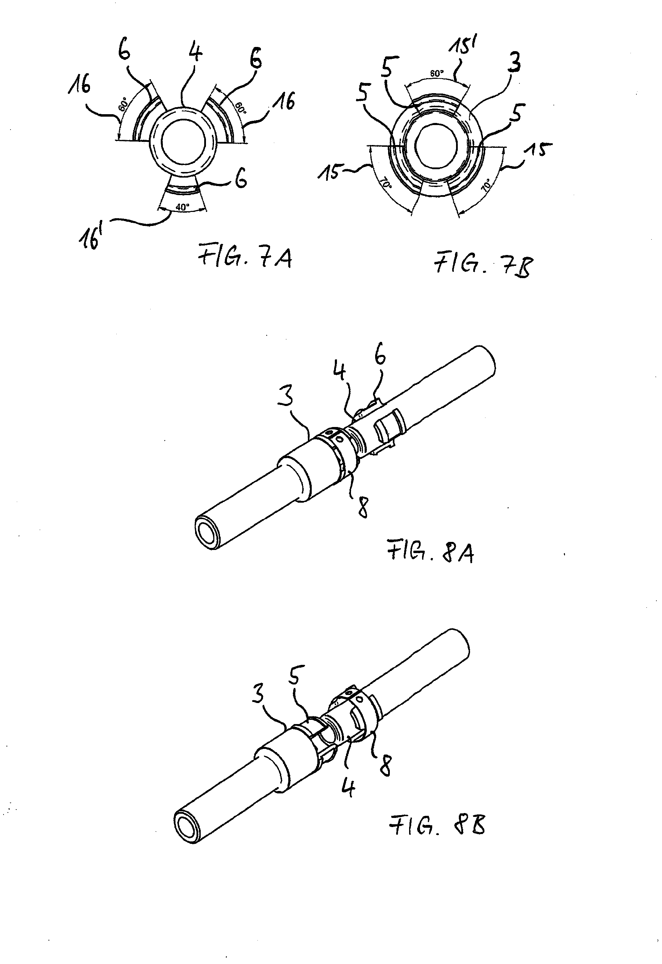

In der Figur 7A ist der Kupplungsstecker 4 gemäß einer Ausführungsform in einer Ansicht in axialer Richtung dargestellt, deren spezielle Merkmale mit allen zuvor beschriebenen Ausführungsformen kombinierbar sind. Die Führungssegmente 6 sind vorzugsweise über den Umfang verteilt angeordnet, wobei ein Führungssegment 6 sich über einen Umfangsabschnitt 16' mit einer Länge bzw. einem Winkelbereich von 40° erstreckt, während die Umfangsabschnitte 16 der übrigen zwei Führungssegmente 6 sich über jeweils 60° erstrecken. Gemäß dieser Ausführungsform ist ein Einstecken des Kupplungssteckers 4 nur dann möglich, wenn die Kupplungsaufnahme 3 dementsprechende Führungsstege 5 aufweist, vgl. Figur 7B. Einer der Führungsstege 5 erstreckt sich über einen Umfangsabschnitt 15' von 60°, während sich die Umfangsabschnitte 15 der übrigen zwei Führungsstege 5 jeweils über 70° erstrecken. In der Summe bilden alle Umfangabschnitte 15', 15, 16', 16 einen vollen Umfang von 360°.

Die Figuren 8A und 8B verdeutlichen zwei verschiedene Möglichkeiten, die Verriegelungsfeder 8 vorzumontieren, nämlich entweder auf der Führungsstegen 5 (Figur 8A) oder auf den Führungssegmenten 6 (Figur 8B).

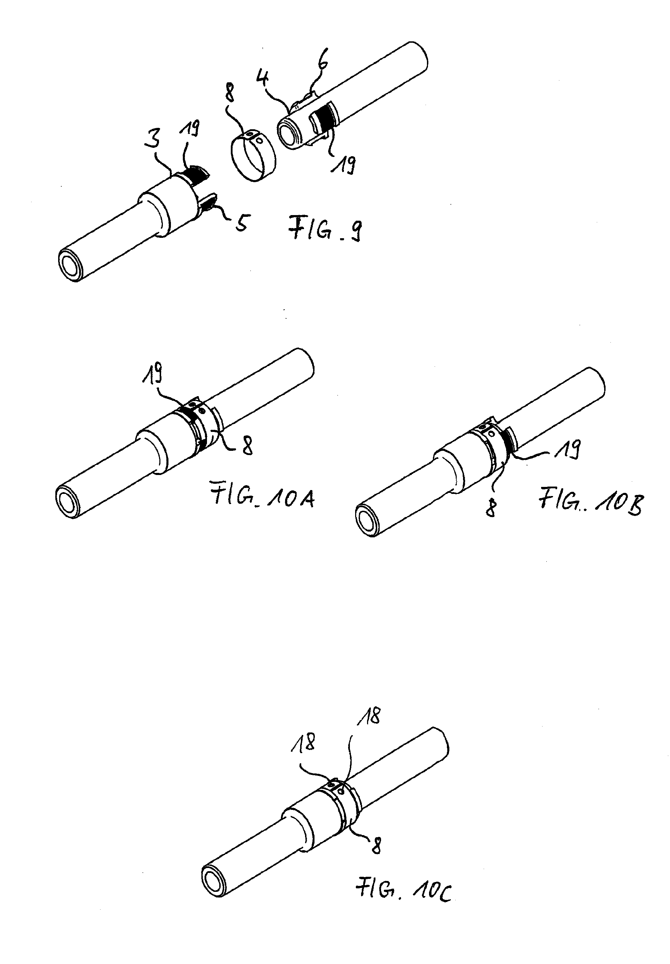

In der Figur 9 ist eine Ausführungsform des erfindungsgemäßen Schnellverbinders dargestellt, deren spezielle Merkmale bei allen zuvor beschriebenen Ausführungsformen vorkommen können. Ein Nutgrund 19 an den Führungsstegen 5 und den Führungssegmenten 6 ist hierbei optisch, insbesondere farblich von seiner Umgebung abgesetzt, beispielsweise durch Verwendung einer Signalfarbe. Die Figuren 10A und 10B verdeutlichen, dass im Fall einer Fehlmontage der farblich abgesetzte Nutgrund 19 deutlich erkennbar bleibt und somit die fehlerhafte Montage anzeigt. In Figur 10C ist die korrekte Verriegelung des Schnellverbinders gemäß Figur 9 dargestellt. In diesem Fall verdeckt die Verriegelungsfeder 8 den gesamten Nutgrund 19.

### Bezugszeichenliste

- 1: Seitliche Begrenzungsflächen
- 2: Nut
- 3: Kupplungsaufnahme
- 4: Kupplungsstecker
- 5: Führungsstege
- 6: Führungssegmente
- 7: Einstecköffnung
- 8: Verriegelungsfeder
- 10: Freies Ende
- 11: Erste Absätze
- 12: Abstand
- 14: Rampe
- 15, 15': Umfangsabschnitte
- 16, 16': Umfangsabschnitte
- 17: Zweite Absätze
- 18: Angriffspunkte
- 19: Nutgrund
- 20: Dichtung

## Patentansprüche

1. Schnellverbinder zur Herstellung lösbarer Schlauch- und/oder Rohrverbindungen, mit einer Kupplungsaufnahme (3) und mit einem Kupplungsstecker (4), wobei die Kupplungsaufnahme (3) eine Einstecköffnung (7) für den Kupplungsstecker (4) aufweist,
wobei Führungsstege (5) an der Kupplungsaufnahme (3) und Führungssegmente (6) an dem Kupplungsstecker (4) derart angeordnet sind, dass diese sich komplementär zu einer Nut (2) ergänzen, wobei seitliche Begrenzungsflächen (1) der Nut durch die Führungsstege (5) und durch die Führungssegmente (6) gebildet sind, sobald der Kupplungsstecker (4) mit der Kupplungsaufnahme (3) verbunden ist, und
wobei die Nut (2) zur Aufnahme mindestens einer der Verriegelung von Kupplungsaufnahme (3) und Kupplungsstecker (4) dienenden Verriegelungsfeder (8) vorgesehen ist,
wobei die Führungsstege (5) und die Führungssegmente (6) jeweils erste Absätze (11) zur Bildung der seitlichen Begrenzungsflächen (1) der Nut (2) aufweisen,
**dadurch gekennzeichnet,**
**dass** die ersten Absätze (11) jeweils eine ansteigende Rampe (14) zum Aufweiten der Verriegelungsfeder (8) aufweisen.

2. Schnellverbinder nach Anspruch 1,
**dadurch gekennzeichnet,**
**dass** die Führungsstege (5) in axialer Richtung über die Einstecköffnung (7) hinausragen.

3. Schnellverbinder nach einem der vorhergehenden Ansprüche,
**dadurch gekennzeichnet,**
**dass** die Führungssegmente (6) auf dem Umfang des Kupplungssteckers (4) mit einem Abstand (12) von einem freien Ende (10) des Kupplungssteckers (4) angeordnet sind.

4. Schnellverbinder nach Anspruch 3,
**dadurch gekennzeichnet,**
**dass** das freie Ende (10) in der Einstecköffnung (7) über den Abstand (12) axial geführt ist, wobei die Führungsstege (5) und die Führungselemente (6) bei einem Einstecken des Kupplungssteckers (4) in die Kupplungsaufnahme (3) über den Abstand (12) hinaus in gegenseitigen Eingriff gelangen.

5. Schnellverbinder nach einem der vorhergehenden Ansprüche,
**dadurch gekennzeichnet,**
**dass** an der Kupplungsaufnahme (3) mindestens drei Führungsstege (5) über den Umfang verteilt angeordnet sind.

6. Schnellverbinder nach einem der vorhergehenden Ansprüche,
**dadurch gekennzeichnet,**
**dass** die Führungsstege (5) und die Führungssegmente (6) sich jeweils über einen Umfangsabschnitt (15, 15', 16, 16') erstrecken, wobei alle Umfangsabschnitte sich zu einem vollen Umfang ergänzen.

7. Schnellverbinder nach Anspruch 6,
**dadurch gekennzeichnet,**
**dass** der Umfangsabschnitt (15') mindestens eines Führungsstegs (5) sich in seiner Länge entlang des Umfangs von den Umfangsabschnitten (15) der übrigen Führungsstege unterscheidet und/oder dass der Umfangsabschnitt (16') mindestens eines Führungssegments (6) sich in seiner Länge entlang des Umfangs von den Umfangsabschnitten (16) der übrigen Führungssegmente unterscheidet.

8. Schnellverbinder nach einem der vorhergehenden Ansprüche,
**dadurch gekennzeichnet,**
**dass** die Führungsstege (5) und die Führungssegmente (6) jeweils zweite Absätze (17) aufweisen, wobei die ersten Absätze (11) der Führungsstege mit den zweiten Absätzen (17) der Führungssegmente, sowie die ersten Absätze (11) der Führungssegmente mit den zweiten Absätzen (17) der Führungsstege sich jeweils zu einer geschlossenen seitlichen Begrenzungsfläche (1) der Nut (2) ergänzen, sobald der Kupplungsstecker (4) mit der Kupplungsaufnahme (3) verbunden ist.

9. Schnellverbinder nach einem der vorhergehenden Ansprüche,
**gekennzeichnet durch**
eine der Verriegelung von Kupplungsaufnahme (3) und Kupplungsstecker (4) dienenden Verriegelungsfeder (8), wobei eine axiale Breite der Verriegelungsfeder einer axialen Breite der Nut (2) entspricht.

10. Schnellverbinder nach Anspruch 9,
**dadurch gekennzeichnet,**
**dass** die Verriegelungsfeder (8) einen Grund (19) der Nut (2) in einem eingerasteten Zustand im Wesentlichen überdeckt.

11. Schnellverbinder nach einem der Ansprüche 9 oder 10,
**dadurch gekennzeichnet,**
**dass** die Verriegelungsfeder (8) in dem eingerasteten Zustand mit den ersten Absätzen (11) und/oder mit den zweiten Absätzen (17) eine im Wesentlichen geschlossene Oberfläche bildet.

12. Schnellverbinder nach einem der Ansprüche 9 bis 11,
**dadurch gekennzeichnet,**
**dass** die Verriegelungsfeder (8) in einem getrennten Zustand von Kupplungsaufnahme (3) und Kupplungsstecker (4) auf den Führungsstegen (5) oder auf den Führungssegmenten (6) vormontiert ist.

13. Schnellverbinder nach einem der Ansprüche 9 bis 12,
**dadurch gekennzeichnet,**
**dass** die Verriegelungsfeder (8) bei dem Verbinden von Kupplungsaufnahme (3) und Kupplungsstecker (4) durch die starr ausgebildeten Führungsstege (5) oder durch die Führungssegmente (6) aufweitbar ist.

14. Schnellverbinder nach einem der Ansprüche 9 bis 13,
**dadurch gekennzeichnet,**
**dass** die Verriegelungsfeder (8) Angriffspunkte (18) aufweist, wobei die Angriffspunkte (18) ein Aufweiten der Verriegelungsfeder (8) zum Lösen der Schlauch- und/oder Rohrverbindung ermöglichen.
